# EUROPÄISCHE PATENTANMELDUNG

(11) **EP 1 862 091 A1**
(43) Veröffentlichungstag der Anmeldung: **05.12.2007**
(21) Anmeldenummer: 07400011.8
(22) Anmeldetag: 17.04.2007
(51) Int. Cl.: A47B 21/00

(54) **Arbeitsmöbel**

(30) Priorität: 02.06.2006 DE 202006008779 U
(71) Anmelder: Knürr AG, 94424 Arnstorf (DE)
(72) Erfinder: Neudert, Herbert, 94116 Hutthum (DE); Röhrl, Max, 94428 Eichendorf-Aufhausen (DE); Schaitl, Franz, 84140 Gankofen (DE)
(74) Vertreter: Heim, Hans-Karl

(57) **Zusammenfassung**

Die Erfindung betrifft ein Arbeitsmöbel (2), insbesondere für Elektroniker,- Computerund Techniker-Arbeitsplätze.

Zur Verbesserung der Verkabelung ist ein Kabelkanal (4) mit einer Kabelkanalklappe (5) an dem Arbeitsmöbel angeordnet und die Kabelkanalklappe zur Befestigung von Baugruppen und insbesondere Steckdosenleisten (25) vorgesehen. Um ein unbeabsichtigtes Abklappen der Kabelkanalklappe zu verhindern, weist die Kabelkanalklappe einen längsseitigen Haltebereich (7) und der Kabelkanal einen längsseitigen Aufnahmebereich (6) auf. Diese zusammenwirkenden Bereiche sind derart ausgebildet, dass neben einer Öffnungs- und Abdeckstellung der Kabelkanalklappe zusätzlich eine Arretierstellung gewährleistet ist, in welche die geöffnete Kabelkanalklappe selbsttätig einrastet.

## Beschreibung

Die Erfindung betrifft ein Arbeitsmöbel gemäß dem Oberbegriff des Anspruchs 1.

Die Erfindung ist insbesondere auf Elektroniker-Arbeitsplätze oder auch Computer- und Techniker-Arbeitsplätze und eine verbesserte Verkabelung dieser Arbeitsplätze gerichtet.

Aus EP 0 681 439 B1 ein Arbeitsmöbel bekannt, welches für Computer-, Labor-, Techniker- oder Elektroniker-Arbeitsplätze eingesetzt und in außerordentlich einfacher Weise entsprechend ausgerüstet und auch nachträglich umgerüstet werden kann. Eine Tischplatte ist als eine erste Arbeitsebene auf Stützenfüßen angeordnet, und ein horizontaler Kabelkanal, welcher gleichzeitig als Versteifungsverbindung zwischen den Stützenfüßen angeordnet ist, dient der horizontalen Führung von Kabeln und auch Versorgungsleitungen für den Anschluss von Geräten, Baugruppen und dergleichen des Arbeitsplatzes. Der Kabelkanal ist wannenförmig ausgebildet und besteht aus mehreren Längsprofilen sowie einer abnehmbaren und aufschwenkbaren Abdeckung. Eine Befestigung von Baugruppen und Steckdosenleisten an der Abdeckung ist bei diesem Arbeitsplatz nicht vorgesehen.

Ein aus DE 88 12 073.2 U1 bekannter Arbeitstisch weist einen Kabelkanal auf, welcher zwischen zwei parallelen, sich über die Breite des Tisches erstreckenden Tragprofilen und einem vorderen und hinteren Tischplattenbereich angeordnet ist. Der Kabelkanal ist aus mehreren, lösbar miteinander verbundenen Profilelementen, beispielsweise einem Boden- und zwei Seitenelementen, gebildet, und ein oberes Abdeckelement ist zur Ausbildung eines geschlossenen, EMV-abgeschirmten Kabelkanals auf die Seitenelemente aufsetzbar. Die lösbare Verbindung der Profilelemente und des Abdeckelementes erfolgt über komplementär ausgebildete Rastelemente beziehungsweise Federn und Nuten. Eine Verschwenkbarkeit des Abdeckelementes ist bei diesem Kabelkanal nicht vorgesehen.

Ein vertikaler Kabelkanal zwischen einem vorderen und rückseitigen Vertikalprofil, welche im Abstand voneinander angeordnet sind und einen Stützenfuß für ein Arbeitsmöbel bilden, ist aus DE 298 00 705 U1 bekannt. Der vertikale Kabelkanal wird von zwei parallel angeordneten Verblendungen gebildet, welche jeweils an dem rückseitigen Vertikalprofil scharnierartig und an dem vorderen Vertikalprofil über Federelemente gehalten werden. Mittels der scharnierartigen Befestigung der Verblendungen können diese aus einer Abdeckstellung in eine Öffnungsstellung bei einem vorgebbaren Öffnungswinkel gehalten werden.

Bei einer horizontalen Anordnung eines Kabelkanals und einer aufschwenkbaren Abdeckung beziehungsweise Kabelkanalklappe, besteht die Gefahr, dass die Kabelkanalklappe unbeabsichtigt, beispielsweise bei einem kurzen Berühren oder Dagegenstoßen, aus der Öffnungsstellung in die Abdeckstellung klappt. Ein derartiges Abklappen der Kabelkanalklappe kann insbesondere dann erfolgen, wenn innenseitig an der Kabelkanalklappe Baugruppen und Steckdosenleisten angebracht sind. Eine derartige Ausrüstung der Arbeitsmöbel auch im Bereich des Kabelkanals ist aufgrund der ständig steigenden Anorderungen, insbesondere an Elektroniker-Arbeitsplätze, erforderlich. Beim Abklappen sind Verletzung des Benutzers oder auch Beschädigungen der Kabel und Baugruppen nicht auszuschließen.

Der Erfindung liegt die **Aufgabe** zugrunde, ein Arbeitsmöbel, insbesondere einen Elektroniker-Arbeitsplatz, zu schaffen, welcher einen Kabelkanal mit einer Kabelkanalklappe zur Kabelführung und zur Befestigung von Baugruppen und Steckdosenleisten ermöglicht und ein sicheres Verschwenken der Kabelkanalklappe aus einer Abdeckstellung in eine Öffnungsstellung und umgekehrt gewährleistet.

Erfindungsgemäß wird die Aufgabe durch die Merkmale des Anspruchs 1 gelöst. Vorteilhafte Ausgestaltungen sind in den Unteransprüchen und in der Figurenbeschreibung enthalten.

Ein Grundgedanke der Erfindung kann darin gesehen werden, das Arbeitsmöbel mit einem Kabelkanal zu versehen, bei welchem die aus einer Abdeckstellung in eine Öffnungsstellung verschwenkbare Kabelkanalklappe in der Öffnungsstellung gegen ein unbeabsichtigtes Schließen gesichert ist. Indem die Kabelkanalklappe auch bei einem versehentlichen Berühren oder Dagegenstoßen in der Öffnungsstellung verharrt und nicht abklappt, ist eine ungehinderte Montage und Bedienung von Baugruppen und Steckdosenleisten, welche sowohl in dem Kabelkanal als auch an der Kabelkanalklappe, insbesondere an deren Innenseite, angeordnet sein können, gewährleistet.

Gemäß der Erfindung ist die Kabelkanalklappe zusätzlich zu der Abdeckstellung und Öffnungsstellung in eine Arretierstellung verstellbar und in dieser Arretierstellung gegen ein unbeabsichtigtes Schließen gesichert. Nur ein gezieltes Entsichern durch ein definiertes Bewegen der Kabelkanalklappe aus der Arretierstellung in die Öffnungsstellung ermöglicht ein Abklappen und Schließen des Kabelkanals.

Es ist besonders vorteilhaft, dass die Kabelkanalklappe nach dem Öffnen und Erreichen der Öffnungsstellung selbsttätig in die Arretierstellung gelangt. Das selbsttätige Einrasten der Kabelkanalklappe aus der Öffnungsstellung in die Arretierstellung wird durch eine Arretierungsnut in einem Aufnahmebereich des Kabelkanals und einen definiert ausgebildeten Haltesteg eines Haltebereichs der Kabelkanalklappe erreicht, welcher in die Arretierungsnut einrastet. Dabei ist die Arretierungsnut derart angeordnet, dass die Kabelkanalklappe mit dem daran ausgebildeten Haltesteg nur durch ein Anheben aus der Arretierungsnut und in die Öffnungsstellung gelangen kann.

Es ist vorteilhaft, dass die Arretierstellung durch eine formschlüssige Verbindung im Bereich des Aufnahmebereichs des Kabelkanals und des Haltebereichs der Kabelkanalklappe ausgebildet ist und kein zusätzliches Bauteil für die Abstützung der Kabelkanalklappe in der Öffnungsstellung erforderlich ist. Die formschlüssige Verbindung von Kabelkanal und Kabelkanalklappe in der Arretierstellung ermöglicht somit eine sichere Öffnungsstellung der Kabelkanalklappe und damit eine Befestigung von Baugruppen und Steckdosenleisten auch an der Kabelkanalklappe. Die formschlüssige Verbindung des Kabelkanals und der Kabelkanalklappe für eine Abdeckstellung, Öffnungsstellung und die erfindungsgemäße Arretierstellung verhindert ein unbeabsichtigtes Schließen der Kabelkanalklappe und damit auch das Entstehen von Bedienungsfehlern und einer Verletzungsgefahr.

Die Erfindung wird nachstehend weiter anhand einer Figurenbeschreibung weiter erläutert; in dieser zeigen in stark schematisierter Weise:
- Fig. 1: eine perspektivische Darstellung eines erfindungsgemäßen Arbeitsmöbels;
- Fig. 2: einen ausschnittsweisen Vertikalschnitt durch das erfindungsgemäße Arbeitsmöbel gemäß Fig. 1 im Bereich des Kabelkanals mit Kabelkanalklappe in Abdeckstellung;
- Fig. 3: einen Vertikalschnitt analog zu Fig. 2, jedoch mit einer Kabelkanalklappe in Öffnungsstellung;
- Fig. 4: eine vergrößerte Teildarstellung der Abdeckstellung gemäß Pfeil IV in Fig. 2;
- Fig. 5: eine vergrößerte Teildarstellung der Öffnungsstellung gemäß Pfeil V in Fig. 3 und
- Fig. 6: eine vergrößerte Teildarstellung analog zu Fig. 5, jedoch in Arretierstellung.

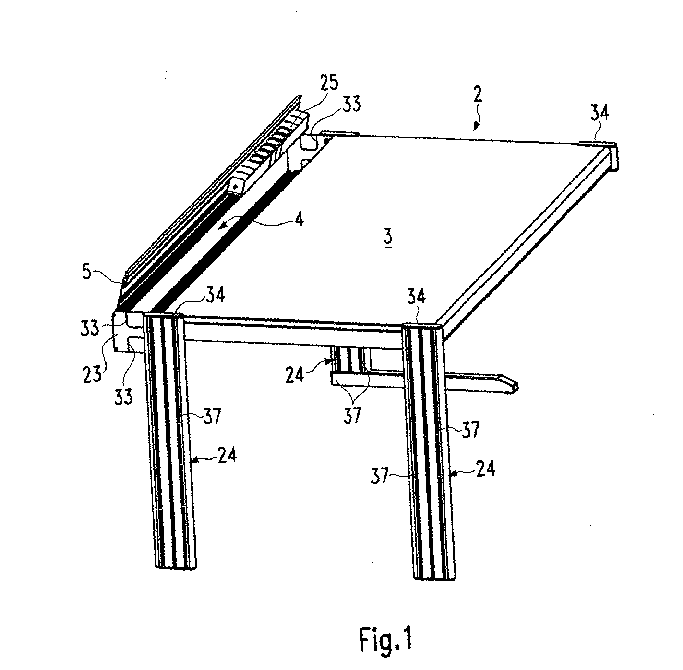

In Fig. 1 ist ein Arbeitsmöbel 2 mit einer Tischplatte 3 und Stützenfüßen 24 stark schematisiert dargestellt. Die Stützenfüße 24 können aus einem Hohlprofil bestehen, welches in DE 31 33 456 C2 beschrieben ist und Längsnuten 37 zur Befestigung der Tischplatte 3 und eines an der Rückseite der Tischplatte 3 horizontal angeordneten Kabelkanals 4 aufweist.

Der Kabelkanal 4 ist in Fig. 1 mit einer geöffneten Kabelkanalklappe 5 gezeigt. In dieser Öffnungsstellung sind Baugruppen und Dosenleisten 25, welche an der Innenseite der Kabelkanalklappe 5 befestigt sind, zugänglich.

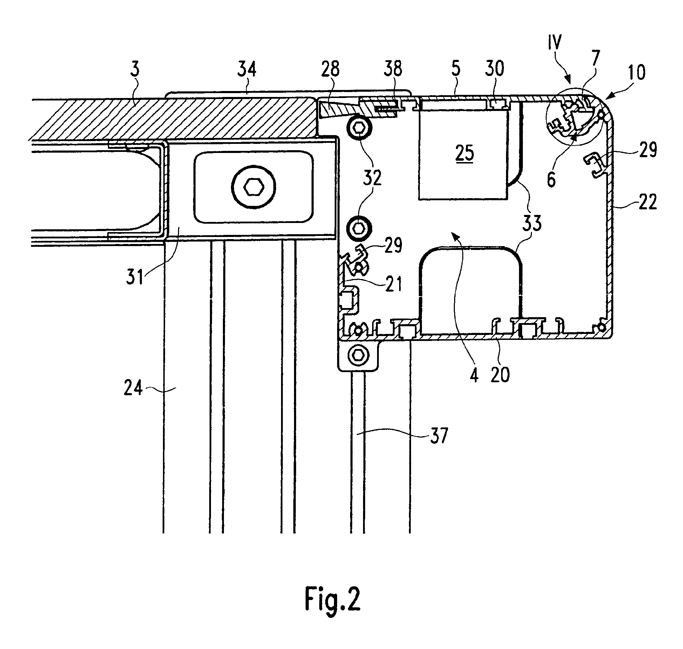

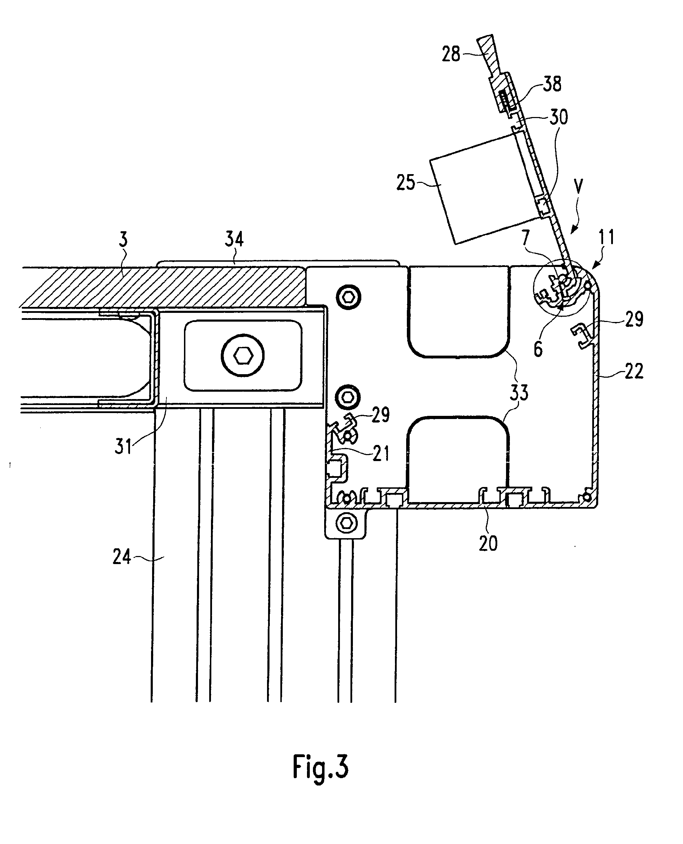

Der Kabelkanal 4 ist etwa U-förmig ausgebildet und weist einen Boden 20, eine tischseitige Längsseite 21 und eine rückseitige Längsseite 22 auf (siehe Figuren 2 und 3). Im Bereich von Stirnseiten 23 kann die Befestigung des Kabelkanals 4 mit Hilfe von Befestigungselementen 32 an einer innenseitigen Längsnut 37 der Stützenfüße 24 erfolgen (siehe Fig. 2).

Die Stirnseiten 23 sind mit Laserschnitten 33 versehen, um eine Kabelführung von aneinandergereihten beziehungsweise nebeneinander angeordneten Arbeitsmöbeln in besonders einfacher Weise realisieren zu können. Im vorliegenden Ausführungsbeispiel sind ein unterer und ein oberer Laserschnitt 33 in den Stirnseiten 23 des Kabelkanals 4 ausgebildet. Diese Laserschnitte 33 sind derart ausgeführt, dass eine punktbeziehungsweise stegförmige Halterung der gegebenenfalls auszubrechenden Bereiche möglich ist.

In Fig. 2 ist der Kabelkanal 4 in geschlossenem Zustand, das heißt, mit der Kabelkanalklappe 5 in Abdeckstellung 10 gezeigt. In dieser Abdeckstellung 10 fluchtet die Kabelkanalklappe 5 mit der Oberfläche der Tischplatte 3 und nur Abdeckkappen 34 auf den Stützenfüßen 24 stehen geringfügig über.

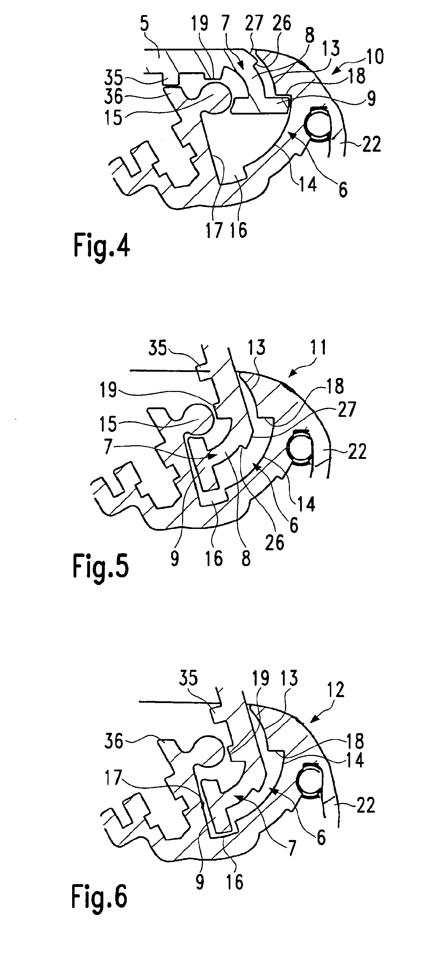

Die Kabelkanalklappe 5 ist für eine gute Zugänglichkeit verschwenkbar und mit einem Haltebereich 7, welcher an der rückseitigen Längskante ausgebildet ist, in einem Aufnahmebereich 6 des Kabelkanals 4 lösbar gehalten. Der Aufnahmebereich 6 ist am oberen Ende der rückseitigen Längsseite 22 des Kabelkanals 4 angeordnet und etwa kreisbogenförmig ausgebildet. Es wird auch auf die Figuren 4 bis 6 verwiesen, welche den Aufnahmebereich 6 an der rückseitigen Längsseite 22 des Kabelkanals 4 und den Haltebereich 7 an der rückseitigen Längskante der Kabelkanalklappe 5 vergrößert in der Abdeckstellung 10 (siehe Fig. 4), in der Öffnungsstellung 11 (siehe Fig. 5) und in einer Arretierstellung 12 (siehe Fig. 6) zeigen. In allen Figuren sind identische Merkmale mit identischen Bezugszeichen versehen.

Aus Fig. 2 geht hervor, dass die Kabelkanalklappe 5 mit einer Kabeldurchführung 28 in Abdeckstellung 10 nahezu an die Tischplatte 3 angrenzt. Die Kabeldurchführung 28 kann eine Bürstenleiste, ein Weichgummielement oder ein Schaumstoffelement sein, welches einen abdichtenden Kabelaustritt aus dem Kabelkanal 4 gewährleistet. Die Kabeldurchführung 28 ist an einem Befestigungssteg 38 an der Innenseite der Kabelkanalklappe 5 befestigt, und an der Innenseite sind auch Befestigungsnuten 30 zur Befestigung von Dosenleisten 25 oder Baugruppen ausgebildet. An der Innenseite der tischseitigen Längsseite 21, welche in diesem Ausführungsbeispiel kürzer als die rückseitige Längsseite 22 ausgebildet ist, und an der Innenseite der rückseitigen Längsseite 22 ist jeweils eine winkelförmig angesetzte T-Nut 29 ausgebildet, welche der Befestigung von weiteren Baugruppen oder Bauteilen dienen.

Um zu verhindern, dass die Kabelkanalklappe 5 aus der in den Figuren 3 und 5 gezeigten Öffnungsstellung 11 unbeabsichtigt in die Abdeckstellung 10 der Figuren 2 und 4 abklappt, ist der Schwenkmechanismus in Form des Aufnahmebereichs 6 des Kabelkanals 4 und des Haltebereichs 7 der Kabelkanalklappe 5 derart ausgebildet, dass eine Arretierung in der Öffnungsstellung selbsttätig erfolgt. Die Arretierstellung 12 ist in Fig. 6 dargestellt.

Der Haltebereich 7 der Kabelkanalklappe 5 ist endseitig mit einem in Richtung Aufnahmebereich 6 gebogenen Haltebogen 8 und einem diametral zum Haltebogen 8 angeordneten Haltesteg 9 versehen. Am Übergang des Haltebogens 8 zum ebenen Bereich der Kabelkanalklappe 5 sind eine Ausformung 19 und ein Auflager 35 nach unten gerichtet ausgebildet, welche mit einer kugelförmigen Schwenkachse 15 und einem Stützlager 36 in der Abdeckstellung 10 gemäß Fig. 4 und beim Verschwenken in die Öffnungsstellung 11 gemäß Fig. 5 zusammenwirken.

Die Kabelkanalklappe 5 greift mit dem Haltebogen 8 und dem Haltesteg 9 sowie mit einer außenseitig angeformten Nase 26 und einer Gleitfläche 27 in der Abdeckstellung 10 und beim Verschwenken in die Öffnungsstellung 11 in den Aufnahmebereich 6 ein. Der Aufnahmebereich 6 des Kabelkanals 4 beziehungsweise der rückseitigen Längsseite 22 ist mit einem oberen Führungsbogen 13, welcher insbesondere mit der Nase 26 und der Gleitfläche 27 zusammenwirkt, einem unteren Führungsbogen 14, welcher insbesondere mit dem entsprechenden Bereich des Haltestegs 9 zusammenwirkt und mit einem vertikal bis geneigt ausgebildeten Anlagenbereich 17 versehen, und zwischen dem unteren Führungsbogen 14 und dem Anlagenbereich 17 ist eine nach unten gerichtete Arretierungsnut 16 ausgebildet.

In diese Arretierungsnut 16 gelangt der Haltesteg 9 aus der Öffnungsstellung der Fig. 5 selbsttätig aufgrund der Schwerkraft, wobei die Ausformung 19 und der obere Führungsbogen 13 durch ihre Ausbildung dieses selbsttätige Arretieren unterstützen.

In der in Fig. 6 gezeigten Arretierstellung 12 ist der Haltesteg 9 eingerastet und damit die Kabelkanalklappe 5 sicher gehalten. Eine Bedienung, ein Montieren und dergleichen im Kabelkanal 4 und insbesondere an der Kabelkanalklappe 5 sind ohne Unterbrechung und Behinderung durch ein eventuelles selbsttätiges Schließen der Kabelkanalklappe 5 gewährleistet.

Aus der Arretierstellung 12 der Fig. 6 gelangt die Kabelkanalklappe 5 mit ihrem Haltesteg 9 nur durch ein Anheben und Verstellen in die Öffnungsstellung 11, in welcher der Haltesteg 9 mit seinem oberen Bereich an der kugelförmigen Schwenkachse 15 nahezu anliegt und danach in die Abdeckstellung 10 der Fig. 4 verschwenkt werden kann. Bei diesem Verschwenken kann die Ausformung 19 auf der Schwenkachse 15 gleiten, bis der Haltesteg 9 an einem stufenförmigen Anschlag 18, welcher zwischen dem oberen Führungsbogen 13 und dem unteren Führungsbogen 14 ausgebildet ist, zur Anlage gelangt (siehe Figuren 2 und 4).

## Patentansprüche

1. Arbeitsmöbel
mit einem Kabelkanal (4) zur Führung von Kabeln und Anordnung von Baugruppen und Dosenleisten, welcher mit einer Kabelkanalklappe (5) abdeckbar ist, wobei die Kabelkanalklappe (5) einen Haltebereich (7) aufweist und der Kabelkanal (4) mit einem Aufnahmebereich (6) versehen ist, in welchem die Kabelkanalklappe (5) mit dem Haltebereich (7) gehalten und aus einer-Abdeckstellung (10) in eine Öffnungsstellung (11) verstellbar ist,
**dadurch gekennzeichnet,**
**dass** der Haltebereich (7) und der Aufnahmebereich (6) derart ausgebildet sind, dass die Kabelkanalklappe (5) aus der Öffnungsstellung (11) in eine Arretierstellung (12) verstellbar und gegen ein unbeabsichtigtes Schließen gesichert ist.

2. Arbeitsmöbel nach Anspruch 1,
**dadurch gekennzeichnet,**
**dass** der Kabelkanal (4) horizontal und insbesondere an einer Rückseite einer Tischplatte (3) angeordnet ist.

3. Arbeitsmöbel nach Anspruch 1 oder 2,
**dadurch gekennzeichnet,**
**dass** der Kabelkanal (4) im Querschnitt etwa U-förmig ausgebildet ist und einen Boden (20), eine tischseitige Längsseite (21), eine parallele rückseitige Längsseite (22) sowie Stirnseiten (23) aufweist und
**dass** der Aufnahmebereich (6) am oberen Ende der rückseitigen Längsseite (22) ausgebildet ist.

4. Arbeitsmöbel nach einem der vorhergehenden Ansprüche,
**dadurch gekennzeichnet,**
**dass** die Kabelkanalklappe (4) innenseitig zur Befestigung von Baugruppen und Dosenleisten (25) ausgebildet ist.

5. Arbeitsmöbel nach einem der vorhergehenden Ansprüche,
**dadurch gekennzeichnet,**
**dass** die Kabelkanalklappe (4) mit dem Haltebereich (7) lösbar im Aufnahmebereich (6) des Kabelkanals (4) gehalten ist.

6. Arbeitsmöbel nach einem der vorhergehenden Ansprüche,
**dadurch gekennzeichnet,**
**dass** die Kabelkanalklappe (5) aus der Öffnungsstellung (11) selbsttätig in die Arretierstellung (12) einrastet.

7. Arbeitsmöbel nach einem der vorhergehenden Ansprüche,
**dadurch gekennzeichnet,**
**dass** der Haltebereich (7) endseitig an der Kabelkanalklappe (5) ausgebildet ist und einen Haltebogen (8) mit einem Haltesteg (9) aufweist, welcher etwa diametral zu dem Haltebogen (8) und etwa parallel zu der Kabelkanalklappe (5) verläuft.

8. Arbeitsmöbel nach einem der vorhergehenden Ansprüche,
**dadurch gekennzeichnet,**
**dass** der Aufnahmebereich (6) des Kabelkanals (4) etwa kreisbogenförmig ausgebildet ist und einen oberen Führungsbogen (13), einen unteren Führungsbogen (14) und eine Schwenkachse (15) aufweist, welche kugelförmig ausgebildet und etwa gegenüber dem oberen Führungsbogen (13) ausgebildet ist.

9. Arbeitsmöbel nach Anspruch 8,
**dadurch gekennzeichnet,**
**dass** der Aufnahmebereich (6) eine Arretierungsnut (16) und einen Anlagenbereich (17) aufweist,
**dass** die Arretierungsnut (16) zwischen dem unteren Führungsbogen (14) und dem Anlagenbereich (17) ausgebildet ist und
**dass** der Anlagenbereich (17), welcher zur Anlage des Haltestegs (9) nahezu vertikal ausgebildet ist, die Arretierungsnut (16) mit der Schwenkachse (15) verbindet.

10. Arbeitsmöbel nach einem der vorhergehenden Ansprüche,
**dadurch gekennzeichnet,**
**dass** die Kabelkanalklappe (5) durch Anheben aus der Arretierstellung (12) gebracht und in die Öffnungsstellung (11) verstellbar ist, wobei der Haltesteg (9) unter Anlage an dem Anlagenbereich (17) aus der Arretierungsnut (16) und mit seinem gegenüberliegenden Ende zur Anlage an die Schwenkachse (15) gelangt und mit dieser Anlage aus der Öffnungsstellung (11) in die Abdeckstellung (10) abklappbar ist.

11. Arbeitsmöbel nach einem der vorhergehenden Ansprüche,
**dadurch gekennzeichnet,**
**dass** zwischen dem unteren Führungsbereich (14) und dem oberen Führungsbereich (13) ein stufenförmiger Anschlag (18) ausgebildet ist, an welchem die Kabelkanalklappe (5) mit einem Bereich des Haltestegs (9) in Abdeckstellung (10) anliegt.

12. Arbeitsmöbel nach einem der vorhergehenden Ansprüche,
**dadurch gekennzeichnet,**
**dass** die Kabelkanalklappe (5) innenseitig am Übergang zu dem Haltebogen (8) eine Ausformung (19) aufweist, welche mit der Schwenkachse (15) des Aufnahmebereichs (6) des Kabelkanals (4) zusammenwirkt.

13. Arbeitsmöbel nach einem der vorhergehenden Ansprüche,
**dadurch gekennzeichnet,**
**dass** die Kabelkanalklappe (5) außenseitig im Bereich des Haltebogens (8) eine Nase (26) und eine Gleitfläche (27) aufweist, welche mit dem oberen Führungsbogen (13) des Aufnahmebereichs (6) des Kabelkanals (4) zusammenwirken.

14. Arbeitsmöbel nach einem der vorhergehenden Ansprüche,
**dadurch gekennzeichnet,**
**dass** der Kabelkanal (4) und die Kabelkanalklappe (5) derart angeordnet und ausgebildet sind, dass die Kabelkanalklappe (5) in Abdeckstellung mit der Oberfläche der Tischplatte (3) fluchtet.

15. Arbeitsmöbel nach einem der vorhergehenden Ansprüche,
**dadurch gekennzeichnet,**
**dass** die Kabelkanalklappe (5) an der dem Haltebereich (7) gegenüberliegenden Längskante mit einer abdichtenden Kabeldurchführung (28), beispielsweise mit einer Bürstenleiste, einem Weichgummielement oder einem Schaumstoffelement, versehen ist.
